# FASCICULE DE BREVET EUROPEEN

(11) **EP 2 655 919 B1**
(45) Date de publication et mention de la délivrance du brevet: **19.11.2014**
(21) Numéro de dépôt: 11804540.0
(22) Date de dépôt: 16.12.2011
(51) Int. Cl.: F16F 7/12

(54) **PIÈCE STRUCTURALE À CAPACITÉ DE DISSIPATION D'ÉNERGIE**
BAUTEIL MIT ENERGIEABLEITUNGSFÄHIGKEIT
STRUCTURAL PART HAVING THE ABILITY TO DISSIPATE ENERGY

(30) Priorité: 24.12.2010 FR 1061231
(43) Date de publication de la demande: 30.10.2013
(73) Titulaire: Airbus Group SAS, 75016 Paris (FR)
(72) Inventeur: GUIMARD, Jean-Mathieu, F-75020 Paris (FR); CAVALIERE, Frédérick, F-78180 Montigny Le Bretonneux (FR)
(74) Mandataire: Fourcade, Emmanuelle
(86) Numéro de dépôt international: PCT/EP2011/073095
(87) Numéro de publication internationale: WO 2012/084727

(56) Documents cités:
- EP-A2- 0 376 729
- DE-C1- 4 425 829
- FR-A1- 2 817 608
- FR-A1- 2 903 961
- JP-A- 9 112 065
- US-A- 3 717 223
- US-A- 4 593 870
- US-B1- 6 620 484

## Description

La présente invention concerne une pièce structurale du type apte à dissiper l'énergie délivrée lors d'un choc la sollicitant en compression selon un axe déterminé, jusqu'à rupture, notamment en cas de crash. Une telle pièce est décrite dans le document FR-A1-2903961 qui divulgue un élément structurel de cellule de giravion.

Un domaine d'application particulièrement préféré de l'invention est le domaine aéronautique, dans lequel la pièce structurale peut avantageusement être mise en oeuvre en tant que pièce dite de crash pour un aéronef, c'est-à-dire une pièce participant à la dissipation locale de l'énergie délivrée lors d'un crash. L'invention s'applique cependant également à tout autre domaine dans lequel il est avantageux de mettre en oeuvre un système de dissipation locale d'énergie, en particulier pour les cas de crash, notamment mais non limitativement dans le domaine des véhicules de Formule 1.

Dans le contexte d'application préféré de l'invention du domaine aéronautique, qui sera décrit de façon plus particulièrement détaillée dans la présente description, bien que n'en étant nullement limitatif, on entend par pièce structurale toute pièce entrant dans la constitution d'une structure, qu'il s'agisse aussi bien d'une structure dite primaire, c'est-à-dire devant supporter de fortes charges mécaniques, que d'une structure dite secondaire d'aéronef, c'est-à-dire devant supporter de faibles, voire aucune, charges mécaniques. Ainsi, la pièce selon l'invention peut être, ou entrer dans la constitution de, un cadre de fuselage de l'aéronef, notamment de l'avion ou de l'hélicoptère, un longeron, une traverse, une poutre sinus dite poutre crash, c'est-à-dire dont l'âme présente une ondulation afin de présenter une résistance accrue au flambage dans une direction, etc.

Dans le domaine aéronautique, il existe un besoin croissant d'intégrer la fonction de dissipation locale d'énergie en cas de crash aux pièces structurales qui sont mises en oeuvre, notamment aux pièces constituées en matériau composite à base de fibres de renfort.

Les systèmes ou pièces existant à l'heure actuelle pour la dissipation locale d'énergie en cas de crash sont généralement constitués de tubes, de bielles, de poutres sinus, de caissons, etc. Lorsqu'ils sont appliqués aux structures en matériaux composites, ces systèmes sont conçus pour favoriser en cas de crash, sous l'effet d'un effort de compression appliqué selon une direction prédéterminée, un mode de rupture par matage/fragmentation, favorisant l'établissement progressif de différents types de dégradations intrinsèques des plis composites (fissurations) et des interfaces (délaminage), c'est-à-dire un mode de rupture par écrasement local selon le sens de l'effort, plutôt qu'un mode de rupture par flambage, c'est-à-dire par pliage, ou par rupture brutale, avec désalignement des morceaux qui glissent les uns à côté des autres. Le mode de rupture par matage/fragmentation macroscopique présente notamment l'avantage de générer peu de déplacements dans le sens de l'effort appliqué sur la pièce, et de dissiper une quantité d'énergie bien plus importante que les modes de rupture par flambage et rupture brutale.

Dans le cas de pièces métalliques, du fait de leur nature ductile, ces systèmes favorisent une rupture par matage qui peut s'apparenter à une déformation ou un flambage localisé. En cas de crash, ce mode de rupture dans le sens de l'effort est également plus dissipatif qu'un flambage généralisé ou une rupture brutale de la pièce.

En cas de crash, l'initiation locale de la rupture est assurée par l'utilisation d'un élément dit déclenchant, par exemple une variation d'épaisseur locale, une découpe locale, un impact, etc., qui permet de contrôler le lieu d'initiation de la rupture et le niveau d'effort spécifié. Cette fonction semble à l'heure actuelle relativement bien maîtrisée.

Cependant, il subsiste un besoin d'amélioration de la maîtrise de la dégradation de la pièce structurale une fois la rupture initiée, afin de maximiser la quantité totale d'énergie dissipée. Ce besoin de maîtriser la dégradation s'avère d'autant plus important dans le cas des pièces structurales à sections ouvertes et présentant des faces planes, qui sont moins stables, et donc bien plus sensibles au flambage et à des ruptures brutales, que les tubes ou les caissons.

Afin de pallier ce problème, des solutions proposées par l'art antérieur consistent à assembler sur les pièces structurales des systèmes additionnels dont la fonction est de dissiper l'énergie par une rupture maîtrisée se produisant dans ces systèmes. De tels systèmes présentent cependant les inconvénients d'une conception et de modes de chargements mécaniques complexes, ainsi que d'une capacité de dissipation d'énergie intrinsèquement limitée par leurs dimensions.

La présente invention vise à remédier aux inconvénients des systèmes de dissipation locale d'énergie existants, notamment à ceux exposés ci-avant, en proposant un tel système qui permette une grande maîtrise de la dissipation de l'énergie délivrée lors d'un crash, et ce pour tout type de pièce, et notamment pour les pièces du type à sections ouvertes et faces planes. L'invention vise également à permettre une dissipation d'une quantité importante d'énergie, tout en assurant que ce système soit de conception et de mise en oeuvre simples.

A cet effet, il est proposé selon la présente invention une pièce structurale apte à dissiper l'énergie délivrée lors d'un choc sollicitant cette pièce en compression selon un axe Z, comportant une âme présentant deux faces opposées, et qui comporte :
- une fenêtre traversante s'étendant entre les faces opposées de l'âme, divisant l'âme en deux parties principales disposées successivement selon l'axe Z, dites respectivement première partie et deuxième partie,
- et un dispositif dit de dissipation d'énergie comportant des moyens de découpe disposés dans la fenêtre et aptes à assurer la découpe d'au moins une des parties de l'âme en lamelles sous l'effet d'un effort de compression exercé sur la pièce selon l'axe Z, et des moyens de dégagement des lamelles ainsi formées.

La pièce structurale selon l'invention assure avantageusement, sous l'effet d'un effort de compression exercé sur elle selon l'axe Z, une dissipation de l'énergie ainsi délivrée qui s'effectue par dégradation de sa structure elle-même, par découpe ou hachage. Un tel mode de dégradation permet avantageusement une dissipation maîtrisée d'une quantité importante d'énergie. Un tel système est en outre applicable à tous types de pièces. Il est notamment tout à fait adapté aux pièces structurales présentant des sections ouvertes et des faces planes. Toute pièce existante peut en outre être facilement modifiée par formation de la fenêtre, par exemple par découpage dans son épaisseur, et assemblage du dispositif de dissipation d'énergie dans une configuration opérationnelle, pour parvenir à une pièce structurale conforme à l'invention.

L'invention peut en outre être mise en oeuvre selon les modes réalisation avantageux exposés ci-après, lesquels peuvent être considérés individuellement ou selon toute combinaison techniquement opérante.

Dans des modes de réalisation préférés de l'invention, les moyens de découpe du dispositif de dissipation d'énergie sont aptes à assurer une découpe intégrale de la partie de l'âme sur toute une dimension de la fenêtre mesurée perpendiculairement à l'axe Z, maximisant ainsi la quantité de matière dégradée et par conséquent la quantité d'énergie dissipée consécutivement au choc.

Selon une caractéristique avantageuse de l'invention, la pièce comporte des moyens de maintien de l'alignement de la première partie et de la deuxième partie de l'âme l'une par rapport à l'autre selon l'axe Z, ces moyens assurant en outre avantageusement, consécutivement à un choc exercé sur la pièce selon l'axe Z, le guidage de la partie de pièce à découper vers la zone de découpe. Ceci permet la dégradation de la pièce sur une grande longueur, et par conséquent la dissipation d'une quantité importante d'énergie, en même temps qu'une bonne maîtrise de cette dissipation. Ces moyens de maintien sont notamment inclus dans le dispositif de dissipation d'énergie.

Dans des modes de réalisation particulièrement préférés de l'invention, le dispositif de dissipation d'énergie comporte deux éléments fixés respectivement contre chacune des faces opposées de l'âme, au moins un premier élément étant pourvu d'une série d'ergots de découpe s'étendant dans la fenêtre depuis la face de fixation correspondante et un deuxième élément étant pourvu d'ouvertures disposées chacune en vis-à-vis d'un ergot, pour le dégagement des lamelles de pièce découpées par les ergots.

Ces éléments se présentent de préférence sous forme de plaques, de préférence métalliques, dont au moins une présente une alternance d'ergots de découpe et d'ouvertures. Ces plaques, appliquées contre les faces opposées de l'âme, constituent préférentiellement avantageusement les moyens de maintien de l'alignement de la première partie et de la deuxième partie de l'âme l'une par rapport à l'autre, selon l'axe Z.

De préférence, chacun des éléments est pourvu d'une série d'ergots de découpe et d'ouvertures disposés en alternance, les ergots d'un élément étant disposés en vis-à-vis des ouvertures de l'élément opposé. Un tel mode de réalisation permet avantageusement de réaliser une découpe de la pièce en deux séries de lamelles, dégagées respectivement par chacune des faces opposées de l'âme. Préférentiellement, le dispositif de dissipation d'énergie est en outre configuré de sorte à assurer une découpe symétrique de la partie de l'âme, ce qui garantit le maintien stabilisé d'un régime quasi-permanent de dissipation d'énergie, par opposition à un régime transitoire.

Dans des modes de réalisation préférés de l'invention, chaque ergot d'un élément présente un pan incliné en direction de l'ouverture portée par l'élément opposé disposée en vis-à-vis, facilitant avantageusement le dégagement des lamelles formées par découpe.

De préférence, les ergots s'étendent depuis une des faces de l'âme jusqu'à la face opposée, assurant ainsi que l'âme soit dégradée sur toute son épaisseur.

Selon une caractéristique avantageuse de l'invention, les deux éléments sont fixés l'un à l'autre, de préférence au niveau de la fenêtre, si bien que le risque qu'ils se désolidarisent consécutivement à un crash et/ou à une dégradation de la pièce est limité.

Dans des modes de réalisation préférés de l'invention, les éléments sont fixés à l'âme uniquement au niveau de la deuxième partie, et ils s'étendent respectivement le long de chaque face de la première partie. Dans une telle configuration particulièrement avantageuse de l'invention, le dispositif de dissipation d'énergie présente uniquement une fonction de dissipation d'énergie par dégradation de la pièce en cas de crash, et il ne participe pas au transfert des charges statiques en fonctionnement normal. Un tel mode de réalisation est notamment tout à fait adapté aux pièces structurales destinées à n'assurer qu'une fonction de dissipation d'énergie en cas de crash, et ne participant pas aux fonctions de chargement statique de la structure au sein de laquelle elles sont intégrées.

Dans les cas où la pièce doit assurer les deux fonctions, c'est-à-dire chargement mécanique et dissipation d'énergie en cas de crash, le dispositif de dissipation d'énergie selon l'invention peut alors être fixé par ses deux éléments respectivement à chacune des première partie et deuxième partie de l'âme.

Dans des variantes de l'invention, le dispositif de dissipation d'énergie reste fixé uniquement à la deuxième partie de l'âme, et la pièce est configurée de sorte à permettre le transfert des charges statiques autour de la fenêtre ménagée dans l'âme, par exemple via des bords tombés, éventuellement localement renforcés. Au-delà d'un niveau spécifié de chargement en compression, correspondant à une situation de crash et provoquant l'initiation de la rupture, la première partie non fixée de l'âme est alors guidée entre les éléments du dispositif de dissipation d'énergie jusqu'à la zone de découpe.

Dans d'autres variantes de l'invention, le dispositif de dissipation d'énergie est configuré de sorte à être apte à découper chacune des deux parties de l'âme. Dans ce cas, les deux éléments du dispositif sont assemblés l'un à l'autre au niveau de la fenêtre, et ils ne sont pas assemblés à l'âme. Ils s'étendent respectivement le long de chaque face de chacune des deux parties de l'âme, de sorte qu'ils assurent le guidage de chacune de ces parties vers la zone de découpe. La forme des ergots est en outre choisie pour permettre la découpe de chacune des ces deux parties de l'âme.

Dans la configuration préférée de l'invention dans laquelle les éléments sont fixés uniquement à la deuxième partie de l'âme, préférentiellement, un des éléments comporte une butée s'étendant perpendiculairement à l'axe Z, cette butée étant en contact avec un bord de la deuxième partie de l'âme défini par la fenêtre. Une telle caractéristique permet avantageusement de diminuer l'effort de cisaillement appliqué sur les éléments de fixation des éléments à la deuxième partie de l'âme.

Le dispositif de dissipation d'énergie est en outre de préférence disposé sur la pièce de telle sorte que la première partie de l'âme soit maintenue espacée des ergots de découpe dans sa configuration initiale, préalablement à une sollicitation consécutive à un crash.

Dans des modes de réalisation préférés de l'invention, la pièce structurale comporte des moyens d'initiation locale de rupture sous l'effet d'un effort de compression exercé sur ladite pièce selon l'axe Z, ces moyens étant aptes à initier la rupture au droit de la fenêtre. Ces moyens d'initiation locale de rupture peuvent être de tout type classique en lui-même. En particulier, la présence même de la fenêtre ménagée dans l'âme peut constituer un moyen d'initiation de la rupture, en cas de réduction de la section travaillante de la pièce dans la zone de la fenêtre.

L'invention n'exclut cependant pas que la pièce soit dépourvue de tels moyens.

La pièce structurale selon l'invention est de préférence formée en matériaux composites à base de fibres de renfort, du moins en ce qui concerne son âme. L'invention s'applique cependant également tout aussi bien aux pièces structurales métalliques.

L'invention sera maintenant plus précisément décrite dans le cadre de modes de réalisation préférés, qui n'en sont nullement limitatifs, représentés sur les figures 1 à 12, dans lesquelles :
- la figure 1 représente en vue en perspective un premier élément d'un dispositif de dissipation d'énergie d'une pièce structurale selon un mode de réalisation de l'invention ;
- la figure 2 montre en vue en perspective un deuxième élément d'un dispositif de dissipation d'énergie d'une pièce structurale selon un mode de réalisation de l'invention ;
- la figure 3 illustre une pièce structurale selon un mode de réalisation de l'invention, avec présence d'une fenêtre dans l'âme, sans dispositif de dissipation d'énergie ;
- la figure 4 illustre la pièce structurale de la figure 3, avec le dispositif de dissipation d'énergie ;
- la figure 5 représente une vue en coupe selon le plan A-A de la pièce de la figure 4 ;
- la figure 6 illustre schématiquement la découpe d'une pièce structurale selon un mode de réalisation de l'invention par le dispositif de dissipation d'énergie ;
- la figure 7 montre la pièce de la figure 4 consécutivement à un effort de compression à rupture exercé sur elle selon l'axe Z ;
- la figure 8 illustre de façon schématique la dégradation de l'âme de la pièce de la figure 4 consécutivement à un effort de compression à rupture exercé sur elle ;
- la figure 9 montre en vue en perspective une poutre dite sinus de l'art antérieur ;
- la figure 10 montre une variante d'une pièce structurale selon l'invention substituable à une poutre sinus au sein d'une structure plus globale ;
- la figure 11 représente en vue en perspective une variante d'un élément d'un dispositif de dissipation d'énergie d'une pièce structurale selon un mode de réalisation de l'invention ;
- et la figure 12 représente une vue équivalente à la vue de la figure 5, dans une configuration dans laquelle la pièce est équipée des éléments de la figure 11.

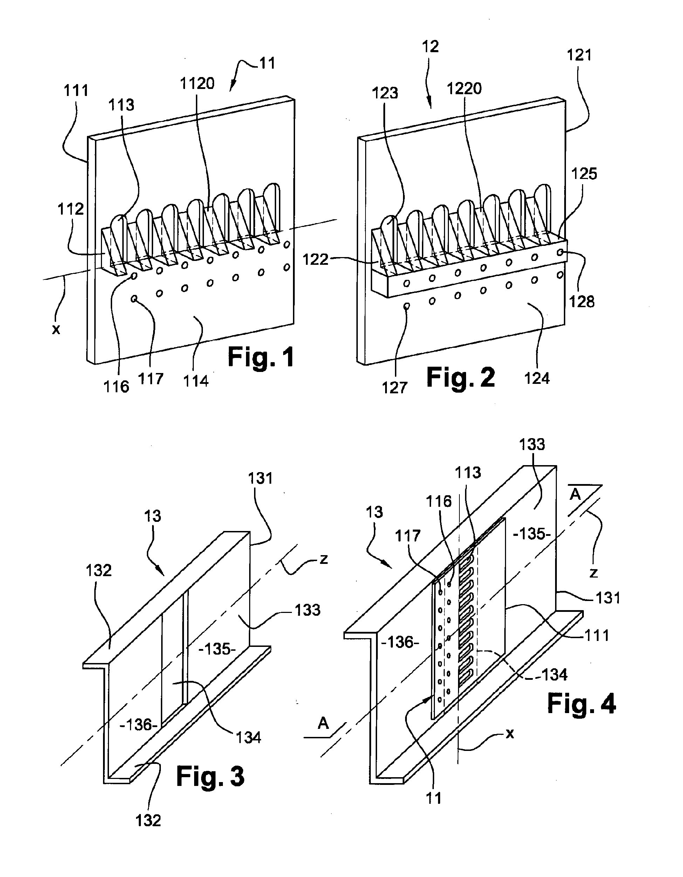

Un premier exemple de réalisation d'une pièce structurale selon l'invention est illustré sur les figures 1 à 8.

Cette pièce structurale comporte un dispositif dit de dissipation d'énergie, dont un mode de réalisation particulièrement préféré, bien que non limitatif de l'invention, est montré sur les figures 1 et 2.

Ce dispositif de dissipation d'énergie comporte un premier élément 11, représenté sur la figure 1, sous forme d'une plaque 111 qui présente, sur une zone de préférence centrale, une alternance d'ergots 112 et d'ouvertures traversantes 113, alignés selon un axe x.

Les ergots 112 peuvent présenter toute forme. Dans le mode de réalisation préféré objet de la figure 1, ils présentent une section triangulaire et une épaisseur sensiblement constante. Ils s'étendent depuis une face dite interne 114 de la plaque 111, sensiblement perpendiculairement à cette dernière. Leur face dite supérieure 1120, qui s'étend en biais depuis la plaque 111, est de préférence légèrement incurvée, mais peut également être plane.

Les ouvertures 113 présentent quant à elles une hauteur supérieure ou égale à la hauteur des ergots 112. Elles peuvent présenter toute forme.

La plaque 111 est en outre percée d'au moins une série d'orifices traversants dits de fixation 116, alignés selon un axe de préférence parallèle à l'axe x. Dans le mode de réalisation objet de la figure 1, la plaque est percée de deux séries d'orifices traversants respectivement 116, 117, qui sont alignés selon deux axes sensiblement parallèles. Un tel nombre de séries d'orifices n'est cependant nullement limitatif de l'invention.

Le dispositif comporte un deuxième élément 12, représenté sur la figure 2, dont la forme et les dimensions sont de préférence sensiblement équivalentes à celles du premier élément 11. Ce deuxième élément 12 se présente ainsi sous forme d'une plaque 121 présentant une alternance d'ergots 122 et d'ouvertures traversantes 123 alignés, les ergots 122 s'étendant depuis une face dite interne 124 de la plaque 121.

Le deuxième élément 12 se différencie de préférence du premier élément 11 en ce qu'il comporte en outre une butée proéminente 125, sous forme d'une barre s'étendant le long de la face interne 124 de la plaque, et sur laquelle reposent les ergots 122. Cette barre de butée 125 est percée dans son épaisseur d'une série d'orifices traversants 128, qui sont alignés et communiquent chacun avec un orifice traversant 126 de la plaque 121 (non visibles sur la figure 2). La plaque 121 est également percée d'une deuxième série d'orifices traversants 127.

Les éléments 11 et 12 sont en outre configurés de telle sorte que, lorsque les plaques 111 et 121 sont mises en vis-à-vis l'une de l'autre, leurs faces internes respectives 114, 124 en regard l'une de l'autre, et les ergots 112, 122 en coïncidence chacun avec une ouverture 123, 113 de la plaque opposée, les orifices traversants 116, 117 et 126, 127 soient alignés deux à deux.

Les éléments 11, 12 sont de préférence constitués en un matériau métallique, par exemple en acier, titane, aluminium, ou un de leurs alliages, ou en une pluralité de matériaux, par exemple en acier et aluminium, en titane et aluminium, en acier et composite, en titane et composite, en aluminium et composite, etc.

Une pièce structurale 13 selon un mode de réalisation de l'invention est représentée sur la figure 3, dans une configuration dépourvue de dispositif de dissipation d'énergie.

A titre d'exemple de réalisation préféré de l'invention, on a représenté ici une pièce de type à sections ouvertes et faces planes.

Cette pièce 13 comporte une âme 131, et deux bords tombés 132 s'étendant respectivement, sensiblement perpendiculairement à l'âme 131, depuis chacun de bords dits longitudinaux opposés de cette dernière.

La pièce 13 sera décrite dans la présente description comme susceptible d'être soumise, lors d'un crash, à un effort brutal la sollicitant en compression selon un axe dit longitudinal Z, étant entendu que l'axe Z pourrait tout aussi bien être orienté différemment par rapport à la pièce, notamment lui être transversal.

L'âme 131 comporte deux faces principales opposées 133. Elle est percée d'une fenêtre traversante 134 s'étendant entre ces faces, qui la divise entre deux parties principales disposées successivement selon l'axe Z, dites respectivement première partie 135 et deuxième partie 136. Dans le mode de réalisation particulier représenté sur la figure 3, la fenêtre 134 s'étend sur toute une hauteur de l'âme 131, cette hauteur étant mesurée transversalement à l'axe Z. Un tel mode de réalisation n'est cependant nullement limitatif de l'invention.

Sur la figure 4, la pièce structurale 13 est représentée dans sa configuration opérationnelle, dans laquelle les éléments 11, 12 sont fixés à la pièce, respectivement contre chacune des faces opposées de l'âme 131, de telle sorte que les ergots 112, 122 s'étendent dans la fenêtre 134, qui est illustrée en pointillés sur la figure, de préférence sur sensiblement toute la hauteur et dans toute l'épaisseur de cette dernière. L'ensemble est disposé de façon telle que chaque ergot 112, 122 d'un élément se trouve en correspondance d'une ouverture 123, 113 de l'élément opposé. Sur cette figure, seul est visible le premier élément 11, le deuxième élément 12 étant placé dans une disposition similaire contre la face opposée de l'âme.

Les éléments sont en outre disposés de telle sorte que l'axe x d'alignement des ergots soit sensiblement perpendiculaire à l'axe Z. Comme représenté sur la figure 4, chaque élément est disposé de telle sorte que la première série d'orifices de fixation 116, 126 se trouve face à la fenêtre 134. La deuxième série d'orifices de fixation 117 se trouve quant à elle face à la deuxième partie de l'âme 136. Au niveau de la première partie de l'âme, les plaques 111, 121 s'étendent le long des faces 133, sur une longueur suffisante pour assurer un maintien de l'alignement de la première partie 135 et de la deuxième partie 136 de l'âme 131 l'une par rapport à l'autre selon l'axe Z.

La butée 125 présente de préférence une épaisseur sensiblement égale à l'épaisseur de l'âme 131 de la pièce.

La succession d'ergots 112, 122 et d'ouvertures 113, 123 s'étend sur toute la hauteur de la fenêtre 134 mesurée perpendiculairement à l'axe Z.

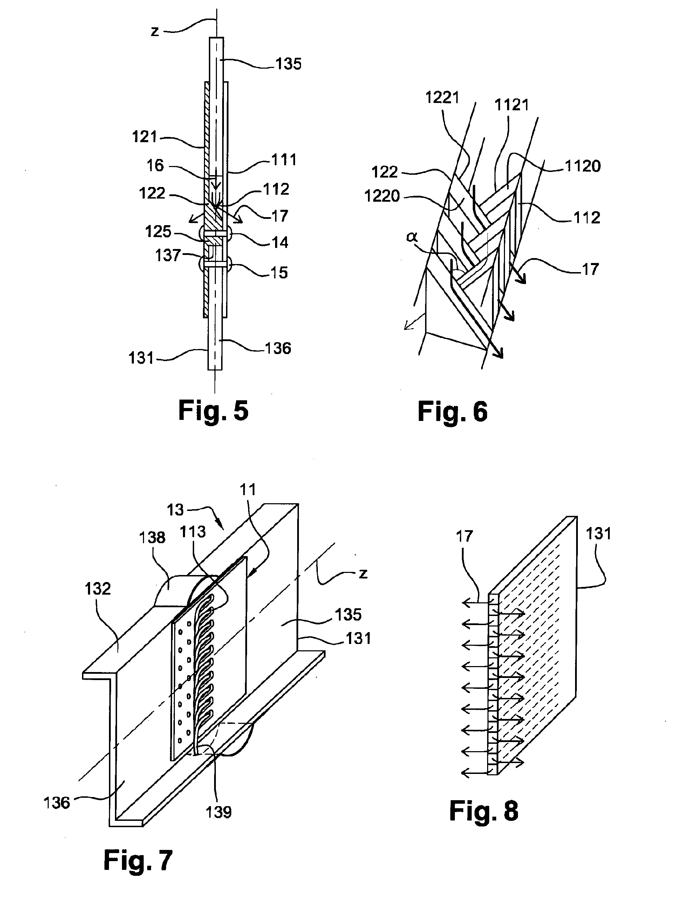

Dans une telle configuration, le premier élément 11 et le deuxième élément 12 sont fixés l'un à l'autre par des moyens de fixation 14 classiques en eux-mêmes, insérés à travers les orifices de fixation respectivement 116 pour le premier élément, et 126, 128 pour le deuxième élément, comme illustré sur la figure 5.

Le premier élément 11, le deuxième élément 12 et la deuxième partie de l'âme 136 sont solidarisés les uns aux autres par des moyens de fixation 15 classiques en eux-mêmes, insérés à travers les orifices de fixation respectivement 117 et 127 des éléments, et à travers l'âme 131 de la pièce.

Comme représenté sur la figure 5, dans la position d'assemblage du dispositif de dissipation d'énergie sur la pièce, la deuxième partie de l'âme 136 vient en appui par un bord dit interne 137, défini par la fenêtre 134, contre la butée 125 portée par le deuxième élément 12. La première partie de l'âme 135 est quant à elle maintenue espacée des ergots 112, 122, et fait face à la face supérieure respectivement 1120, 1220 de ces derniers.

Lorsqu'un effort brutal en compression est exercé sur la pièce selon l'axe Z jusqu'à rupture, la première partie de l'âme 135 est guidée entre les plaques 111, 121 en direction de la zone dite de découpe formée par la succession d'ergots 112, 122, comme indiqué en 16 sur la figure. La deuxième partie de l'âme 136 est quant à elle maintenue fixe entre les plaques 111, 121. Son appui contre la butée 125 du deuxième élément 12 diminue avantageusement les efforts de cisaillement appliqués sur les moyens de fixation 15, et les efforts de matage appliqués aux orifices 117, 127 de fixation à la deuxième partie de l'âme 136.

La première partie de l'âme 135 est alors découpée en lamelles par les ergots 112, 122, qui forment ensemble des ciseaux ou hachoirs, comme illustré de façon schématique sur la figure 6. Cette découpe s'effectue sur toute la hauteur de la fenêtre 134 mesurée perpendiculairement à l'axe Z. Les lamelles ainsi formées sont dégagées par les ouvertures 113, 123 des éléments 11, 12, comme indiqué en 17 sur les figures. Ce dégagement est facilité par le fait que chaque ergot 112, 122 présente une face supérieure 1120, 1220 en biais en direction de l'ouverture 123, 113 opposée. La forme incurvée de ces faces supérieures assure en outre une découpe douce de l'âme.

Afin de faciliter la découpe, et notamment de diminuer le premier pic d'effort de découpe, les ergots 112, 122 peuvent présenter une arête tranchante 1121, 1221 en vis-à-vis de la première partie de l'âme 135.

L'angle α formé entre les faces en biais des ergots respectivement 112, 122 voisins, de même que la largeur des ergots, mesurée transversalement à l'axe Z, ainsi que le nombre total d'ergots, sont déterminés, selon des calculs du ressort de l'homme du métier, de sorte à régler l'effort de découpe au niveau souhaité, en fonction des caractéristiques structurales de l'âme de la pièce, afin de maximiser la quantité d'énergie dissipée consécutivement au crash. Dans des modes de réalisation préférés de l'invention, cet angle α est compris entre 30 et 120 degrés.

La pièce structurale décrite à titre d'exemple en référence aux figures 1 à 8 est configurée de sorte à être apte à assurer une fonction de transfert des charges statiques dans la structure plus globale au sein de laquelle elle est intégrée. Ce transfert de charges statiques s'effectue autour de la fenêtre 134, via les bords tombés 132. Il est d'autant mieux facilité lorsque la structure des bords tombés est conçue à cet effet, notamment lorsque ces derniers sont formés en matériau composite à base de fibres de renfort et composés principalement de plis orientés à 0 degrés (l'âme 131 étant généralement quant à elle composée de plis à +/- 45 degrés).

Au-delà d'un certain niveau de chargement en compression selon l'axe Z, correspondant à un événement brutal tel qu'un crash, il est initié localement une rupture de la pièce, dans la zone contenant la fenêtre 134. Cette rupture est contrôlée par des moyens d'initiation locale de rupture portés par la pièce, au niveau des bords tombés 132. Ces moyens peuvent être de tout type classique en lui-même, par exemple une variation locale d'épaisseur, une découpe locale, etc., réalisée sensiblement au droit de la fenêtre 134 sur les bords tombés.

Sous l'effet d'un choc sollicitant la pièce en compression selon l'axe Z, il se produit alors par exemple une rupture locale par flambage des bords tombés 132 au droit de la fenêtre, illustrée en 138 sur la figure 7. La première partie 135 de l'âme 131 est alors guidée entre les plaques 111, 121 jusqu'à la zone de découpe formée par les ergots 112, 122. Elle y est découpée par ces derniers en lamelles 139, qui sont dégagées par les ouvertures 113, 123. Cette découpe de l'âme 131 est avantageusement effectuée de manière symétrique, comme illustré de façon schématique sur la figure 8, sur toute la hauteur de l'âme, mesurée transversalement à l'axe Z, et sur une longueur importante de cette dernière.

Une quantité importante d'énergie délivrée par le choc est ainsi dissipée. Cette dissipation d'énergie est en outre bien maîtrisée, notamment grâce au fait que la découpe de l'âme est réalisée de façon homogène et contrôlée.

L'invention n'exclut pas pour autant d'autres modes de réalisation de la pièce structurale, notamment les modes dans lesquels les plaques 111, 121 sont également fixées à la première partie de l'âme 135.

De même, la forme particulière de la pièce 13 telle que décrite ci-avant n'est nullement limitative de l'invention, qui s'applique de façon similaire aux pièces présentant tout autre type de forme.

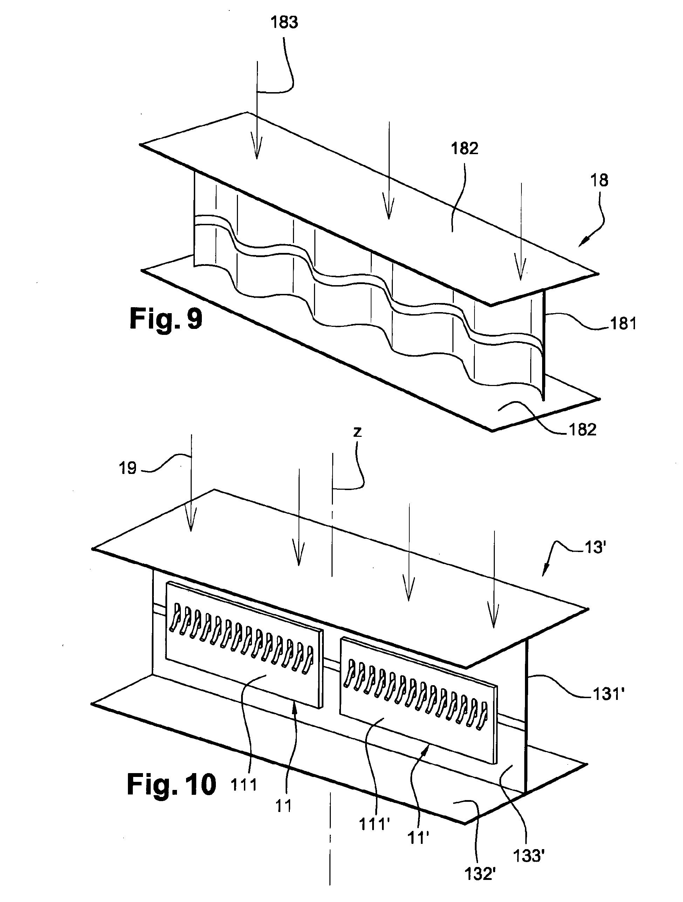

Un autre exemple de réalisation d'une pièce structurale répondant à la définition de l'invention est représenté sur la figure 10.

Cette pièce est destinée à être substituée, dans une structure plus globale, notamment une structure d'aéronef, à une poutre dite sinus, dont un exemple de réalisation classique en lui-même est montré sur la figure 9.

Une telle poutre sinus 18, classique en elle-même, comporte une âme 181 comprise entre deux semelles 182. L'âme 181 est ondulée de façon à présenter une résistance accrue au flambage selon une direction transversale 183. Une telle poutre ne subit pas de chargements mécaniques statiques et est uniquement destinée à dissiper l'énergie délivrée lors d'un choc la sollicitant en compression selon une direction transversale 183, par une combinaison de modes de rupture : matage par endroits, délaminages et ruptures brutales à d'autres. Si la dissipation d'énergie par une telle poutre est globalement bien maîtrisée, elle n'est cependant pas homogène sur toute la poutre, certaines portions présentant une capacité de dissipation moindre que d'autres.

Une pièce structurale selon un mode de réalisation de l'invention, destinée à être substituée à une poutre sinus dans une structure, est représentée sur la figure 10. Cette pièce 13' comporte une âme 131' à faces 133' sensiblement planes, entre deux semelles 132'.

La pièce 13' est pourvue de deux dispositifs de dissipation d'énergie, répondant aux caractéristiques décrites ci-avant en référence aux figures 1 à 8, comportant notamment chacun une paire d'éléments 11, 12 et 11', 12', seuls les premiers éléments 11, 11' étant visibles sur la figure 10. L'ensemble est configuré de telle sorte que l'application d'une force sur une semelle 132', dans la direction 19, parallèlement à l'axe Z, entraîne la découpe de la première partie de l'âme par les dispositifs de dissipation d'énergie, dont il découle une dissipation d'une quantité importante d'énergie qui est bien maîtrisée et plus homogène sur l'ensemble de la pièce que dans le cas d'une poutre sinus classique en elle-même.

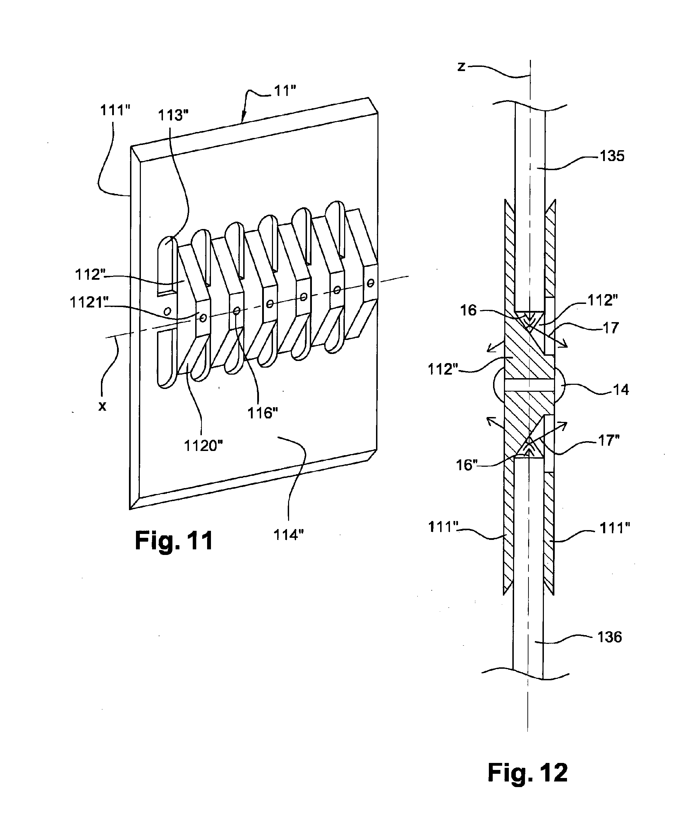

Une variante d'un dispositif de dissipation d'énergie conforme à l'invention est représentée sur les figures 11 et 12.

Ce dispositif de dissipation d'énergie comporte deux éléments identiques 11", chacun sous forme d'une plaque 111" qui présente, sur une zone de préférence centrale, une alternance d'ergots 112" et d'ouvertures traversantes 113", alignés selon un axe x, comme illustré sur la figure 11.

Les ergots 112" présentent une section trapézoïdale et une épaisseur sensiblement constante. Ils s'étendent depuis une face dite interne 114" de la plaque 111 ", sensiblement perpendiculairement à cette dernière. Leur face dite supérieure 1120" comporte deux pans en biais s'étendant à l'opposé l'un de l'autre, de part et d'autre d'une zone centrale 1121". Les ouvertures 113" présentent quant à elles une hauteur supérieure ou égale à la hauteur des ergots 112".

La plaque 111" est en outre percée d'au moins une série d'orifices traversants dits de fixation 116", alignés selon un axe de préférence parallèle à l'axe x, de préférence disposés chacun dans la zone centrale 1121" d'un ergot 112".

Le dispositif formé de deux éléments 11 " identiques est mis en oeuvre de manière similaire à ce qu'il a été décrit ci-avant, mais de sorte à permettre la découpe simultanée de chacune des deux parties 135, 136 de l'âme 131.

Comme indiqué sur la figure 12, un élément 111" est disposé contre chacune des faces de l'âme, de sorte à s'étendre le long de chacune des parties 135, 136 de cette dernière. Les deux éléments 111" ne sont pas fixés à l'âme, mais uniquement assemblés entre eux, au niveau de la fenêtre 134, par des moyens de fixation 14 insérés à travers les orifices de fixation 116" respectifs de chaque élément 111 ".

Les ergots 112" forment ensemble, par leurs deux pans en biais, deux zones de découpe, destinées chacune à la découpe d'une des deux parties de l'âme. Lors d'un choc exercé sur la pièce la sollicitant en compression suivant l'axe Z, chaque partie de l'âme 135, 136 est guidée vers la zone de découpe en vis-à-vis, comme indiqué en 16, 16" sur la figure, et découpée en lamelles, comme indiqué en 17, 17", assurant de la sorte une dissipation d'énergie maximale.

La description ci-avant illustre clairement que par ses différentes caractéristiques et leurs avantages, la présente invention atteint les objectifs qu'elle s'était fixés. En particulier, elle propose une pièce structurale à grande capacité de dissipation de l'énergie délivrée lors d'un choc la sollicitant en compression, cette dissipation d'énergie étant en outre bien maîtrisée et homogène sur toute une surface de la pièce. Ces résultats avantageux sont obtenus y compris dans le cas de pièces à sections ouvertes et faces planes.

## Revendications

1. Pièce structurale (13) apte à dissiper l'énergie délivrée lors d'un choc sollicitant ladite pièce en compression selon un axe Z, comportant une âme (131) présentant deux faces opposées (133), **caractérisée en ce que** ladite pièce comporte :
- une fenêtre traversante (134) s'étendant entre lesdites faces opposées de l'âme, divisant ladite âme en deux parties principales disposées successivement selon l'axe Z, dites respectivement première partie (135) et deuxième partie (136),
- et un dispositif dit de dissipation d'énergie comportant des moyens de découpe (112, 122) disposés dans ladite fenêtre et aptes à assurer la découpe d'au moins une desdites parties de l'âme en lamelles (139) sous l'effet d'un effort de compression exercé sur ladite pièce selon l'axe Z, et des moyens (113, 123) de dégagement des lamelles ainsi formées.

2. Pièce selon la revendication 1, **caractérisée en ce que** les moyens de découpe (112, 122) sont aptes à assurer une découpe intégrale de ladite partie de l'âme (131) sur toute une dimension de la fenêtre (134) mesurée perpendiculairement à l'axe Z.

3. Pièce selon l'une des revendications 1 ou 2, **caractérisée en ce qu'**elle comporte des moyens (111, 121) de maintien de l'alignement de la première partie (135) et de la deuxième partie (136) de l'âme (131) l'une par rapport à l'autre selon l'axe Z.

4. Pièce selon l'une quelconque des revendications 1 à 3, **caractérisée en ce que** le dispositif de dissipation d'énergie comporte deux éléments (11, 12) fixés respectivement contre chacune des faces opposées (133) de l'âme (131), au moins un premier élément (11) étant pourvu d'une série d'ergots de découpe (112) s'étendant dans ladite fenêtre (134) depuis la face de fixation (133) correspondante et un deuxième élément (12) étant pourvu d'ouvertures (123) disposées chacune en vis-à-vis d'un ergot, pour le dégagement de lamelles de pièce (139) découpées par lesdits ergots.

5. Pièce selon la revendication 4, **caractérisée en ce que** chacun desdits éléments (11, 12) est pourvu d'une série ergots de découpe (112, 122) et d'ouvertures (113, 123) disposés en alternance, les ergots d'un élément étant disposés en vis-à-vis des ouvertures de l'élément opposé.

6. Pièce selon l'une des revendications 4 ou 5, **caractérisée en ce que** chaque ergot (112, 122) d'un élément (11, 12) présente un pan (1120, 1220) incliné en direction de l'ouverture (123, 113) portée par l'élément opposé disposée en vis-à-vis.

7. Pièce selon l'une quelconque des revendications 4 à 6, **caractérisée en ce que** les ergots (112, 122) s'étendent depuis une desdites faces (133) jusqu'à la face opposée.

8. Pièce selon l'une quelconque des revendications 4 à 7, **caractérisée en ce que** les deux éléments (11, 12) sont fixés l'un à l'autre, de préférence au niveau de la fenêtre (134).

9. Pièce selon l'une quelconque des revendications 4 à 8, **caractérisée en ce que** les éléments (11, 12) sont fixés à l'âme (134) uniquement au niveau de ladite deuxième partie (136), et **en ce qu'**ils s'étendent respectivement le long de chaque face de ladite première partie (135).

10. Pièce selon l'une quelconque des revendications 4 à 9, **caractérisée en ce qu'**un desdits éléments (12) comporte une butée (125) s'étendant perpendiculairement à l'axe Z, ladite butée étant en contact avec un bord (137) de la deuxième partie (136) défini par la fenêtre (134).

11. Pièce selon l'une quelconque des revendications 1 à 10, **caractérisée en ce qu'**elle comporte en outre des moyens d'initiation locale de rupture sous l'effet d'un effort de compression exercé sur ladite pièce selon l'axe Z, lesdits moyens étant aptes à initier ladite rupture au droit de ladite fenêtre (134).

12. Pièce selon l'une quelconque des revendications 1 à 11, **caractérisée en ce qu'**elle est formée en matériaux composites.

## Patentansprüche

1. Strukturbauteil (13), das in der Lage ist, die Energie abzuführen, die bei einem Stoß freigesetzt wird, der das besagte Bauteil entlang einer Z-Achse komprimiert, und das einen Steg (131) umfasst, der zwei gegenüberliegende Seiten (133) aufweist, **dadurch gekennzeichnet, dass** das besagte Bauteil folgendes enthält:
- ein durchgehendes Fenster (134), das sich zwischen den besagten gegenüberliegenden Seiten des Stegs erstreckt und den besagten Steg in zwei Hauptabschnitte teilt, die nacheinander entlang der Z-Achse angeordnet sind, die jeweils erster Abschnitt (135) und zweiter Abschnitt (136) genannt werden,
- und eine Energieabführvorrichtung genannte Vorrichtung, die Schneidemittel (112, 122) umfasst, die im besagten Fenster angeordnet sind, und die in der Lage sind, zumindest einen der besagten Abschnitte des Stegs unter Einwirkung einer Kompressionskraft, die entlang einer Z-Achse auf das besagte Bauteil ausgeübt wird, in Lamellen (139) zu zerschneiden, sowie Mittel (113, 123) zum Lösen der auf diese Art und Weise gebildeten Lamellen.

2. Bauteil nach Anspruch 1, **dadurch gekennzeichnet, dass** die Schneidemittel (112, 122) in der Lage sind, einen vollständigen Schnitt des besagten Abschnitts des Stegs (131) über eine gesamte Abmessung des Fensters (134) durchzuführen, die senkrecht zur Z-Achse gemessen wird.

3. Bauteil nach einem der Ansprüche 1 oder 2, **dadurch gekennzeichnet, dass** es Mittel (111, 121) zur Beibehaltung der Ausrichtung des ersten Abschnitts (135) und des zweiten Abschnitts (136) des Stegs (131) zueinander entlang der Z-Achse umfasst.

4. Bauteil nach irgendeinem der Ansprüche 1 bis 3, **dadurch gekennzeichnet, dass** die Vorrichtung zur Energieabführung zwei Elemente (11, 12) umfasst, die jeweils an jeder der gegenüberliegenden Seiten (133) des Stegs (131) befestigt sind, wobei zumindest ein erstes Element (11) mit einer Reihe von Schneidkrallen (112) versehen ist, die sich im besagten Fenster (134) aus der entsprechenden Befestigungsseite (133) heraus erstrecken, und ein zweites Element (12) mit Öffnungen versehen ist, die zum Lösen der Lamellen des Teils (139), die von den besagten Krallen zerschnitten werden, jeweils gegenüber einer Kralle angeordnet sind.

5. Bauteil nach Anspruch 4, **dadurch gekennzeichnet, dass** jedes der besagten Elemente (11, 21) mit einer Reihe von Schneidkrallen (112) und Öffnungen (113, 123) versehen ist, die abwechselnd angeordnet sind, wobei die Krallen eines Elements gegenüber den Öffnungen des gegenüberliegenden Elements angeordnet sind.

6. Bauteil nach einem der Ansprüche 4 oder 5, **dadurch gekennzeichnet, dass** jede Kralle (112, 122) eines Elements (11, 12) eine Fläche (1120, 1220) aufweist, die in Richtung der Öffnung (123, 113) geneigt ist, die vom gegenüberliegenden Element getragen wird und gegenüber angeordnet ist.

7. Bauteil nach irgendeinem der Ansprüche 4 bis 6, **dadurch gekennzeichnet, dass** sich die Krallen (112, 122) von einer der besagten Seiten (133) bis zur gegenüberliegenden Seite erstrecken.

8. Bauteil nach irgendeinem der Ansprüche 4 bis 7, **dadurch gekennzeichnet, dass** die beiden Elemente (11, 12) miteinander, und vorzugsweise im Bereich des Fenster (134) befestigt sind.

9. Bauteil nach irgendeinem der Ansprüche 4 bis 8, **dadurch gekennzeichnet, dass** die Elemente (11, 12) nur im Bereich des besagten zweiten Abschnitts (136) auf dem Steg (134) befestigt sind, und dadurch, dass sie sich jeweils entlang jeder Seite des besagten ersten Abschnitts (135) erstrecken.

10. Bauteil nach irgendeinem der Ansprüche 4 bis 9, **dadurch gekennzeichnet, dass** eines der besagten Elemente (12) einen Anschlag (125) umfasst, der sich senkrecht zur Z-Achse erstreckt, wobei der besagte Anschlag mit einem Rand (137) des zweiten Abschnitts (136) in Berührung kommt, der vom Fenster (134) definiert wird.

11. Bauteil nach irgendeinem der Ansprüche 1 bis 10, **dadurch gekennzeichnet, dass** es darüber hinaus Mittel zur lokalen Bruchauslösung unter der Wirkung einer Kompressionskraft umfasst, die entlang der Z-Achse auf das besagte Bauteil ausgeübt wird, wobei die besagten Mittel in der Lage sind, den besagten Bruch auf Höhe des besagten Fensters (134) auszulösen.

12. Bauteil nach irgendeinem der Ansprüche 1 bis 11, **dadurch gekennzeichnet, dass** es aus Verbundwerkstoffen gebildet wird.

## Claims

1. Structural part (13) capable of dissipating the energy delivered during an impact that compresses said part along an axis Z, comprising a web (131) having two opposite faces (133), **characterized in that** said part comprises:
- a through-window (134) extending between said opposite faces of the web, dividing said web into two main portions, referred to as "first portion" (135) and "second portion" (136) respectively, arranged in series along the axis Z;
- and a device, referred to as an energy-dissipation device, comprising cutting means (112, 122) arranged within said window and able to cut at least one of said portions of the web into strips (139) as a result of a compressive force exerted on said part along the axis Z, and means (113, 123) for clearing away the strips thus formed.

2. Part according to claim 1, **characterized in that** the cutting means (112, 122) are able to completely cut out said portion of the web (131) over an entire dimension of the window (134) measured perpendicular to the axis Z.

3. Part according to one of claims 1 or 2, **characterized in that** it comprises means (111, 121) of keeping the first portion (135) and the second portion (136) of the web (131) aligned relative to each other along the axis Z.

4. Part according to any one of claims 1 to 3, **characterized in that** the energy-dissipation device comprises two elements (11, 12) fastened respectively against each of the opposite faces (133) of the web (131), at least a first element (11) being provided with a series of cutting-out spurs (112) extending into said window (134) from the corresponding fastening face (133) and a second element (12) being provided with openings (123), each positioned facing a spur, for clearing away strips of part (139) cut out by said spurs.

5. Part according to claim 4, **characterized in that** each of said elements (11, 12) is provided with a series of cutting-out spurs (112, 122) and openings (113, 123) arranged alternately, the spurs of one element being positioned facing the openings of the opposite element.

6. Part according to any of claims 4 or 5, **characterized in that** each spur (112, 122) of an element (11, 12) has a surface (1120, 1220) inclined towards the opening (123, 113) borne by the opposite element positioned facing it.

7. Part according to any one of claims 4 to 6, **characterized in that** the spurs (112, 122) extend from one of said faces (133) to the opposite face.

8. Part according to any one of claims 4 to 7, **characterized in that** the two elements (11, 12) are fastened to each other, preferably at the window (134).

9. Part according to any one of claims 4 to 8, **characterized in that** the elements (11, 12) are fastened to the web (134) only at said second portion (136), and **in that** they extend respectively along each face of said first portion (135).

10. Part according to any one of claims 4 to 9, **characterized in that** one of said elements (12) comprises a stop (125) extending perpendicular to the axis Z, said stop being in contact with an edge (137) of the second portion (136) defined by the window (134).

11. Part according to any one of claims 1 or 10, **characterized in that** it also comprises means of locally initiating failure as a result of a compressive force exerted on said part along the axis Z, said means being able to initiate failure at the level of said window (134).

12. Part according to any one of claims 1 to 11, **characterized in that** it is made of composite materials.
